# EUROPEAN PATENT APPLICATION

(11) **EP 4 219 842 A1**
(43) Date of publication of application: **02.08.2023**
(21) Application number: 23154090.7
(22) Date of filing: 31.01.2023
(51) Int. Cl.: E02F 9/16, E02F 9/20, B60N 2/75, E02F 3/32

(54) **CONSTRUCTION MACHINE**

(30) Priority: 01.02.2022 JP 2022014195
(71) Applicant: Yanmar Holdings Co., Ltd., Osaka-shi, Osaka (JP)
(72) Inventor: OTSU, Motoharu, Chikugo Fukuoka (JP); OYAMADA, Yasuyuki, Chikugo Fukuoka (JP); BABA, Katsumi, Chikugo Fukuoka (JP)
(74) Representative: Dennemeyer & Associates S.A.

(57) **Abstract**

[Problem] To reduce interference between the console and obstacles.

[Solution] A construction machine includes: a movable portion 6 provided on an upper surface of a hood and pivotable along the upper surface of the hood; a fixer 5 fixed to the upper surface of the hood to restrict a pivoting range of the movable portion 6; and a console supported by the movable portion 6. The construction machine further includes a guide 52 to connect the movable portion 6 to the fixer 5 and guide the movable portion 6 in a predetermined pivoting direction. The movable portion 6 has an opening 62 whose dimension in the pivoting direction is larger than that of the fixer 5, and the fixer 5 is located in the opening 62.

## Description

### TECHNICAL FIELD

The present disclosure relates to a construction machine.

### BACKGROUND ART

Construction machine such as hydraulic excavators are equipped with a console for operating a work machine. For example, the construction machine described in Patent Literature 1 has a driver's seat provided on a top of a hood covering an engine, and consoles provided on left and right sides of the driver's seat. The console has a joystick and an armrest behind the joystick. The console is attached to the hood via a plate.

The console can be pivoted to the left or right direction around an axis located at the rear of the plate. The console can be also raised and lowered around a hinge at the rear of the plate. When the console is lowered, the console is locked in a position away from the driver's seat and the joystick is operable. In conjunction with the movement to flip up the console, the lock is released, the console moves to the driver's seat side, and the joystick becomes inoperable.

### PRIOR ART DOCUMENT

### PATENT DOCUMENT

Patent Literature 1: WO 2009/230749

### SUMMARY OF INVENTION

### TECHNICAL PROBLEM

However, in the configuration described in Patent Literature 1, as the console can be operated only at a position separated from the driver's seat, depending on the width of the space, the console may interfere with obstacles, it is concerned that it is impossible to drive the construction machine or operate the work machine.

In view of the above circumstances, an object of the present disclosure is to provide a construction machine capable of reducing interference between the console and obstacles.

### SOLUTION TO PROBLEM

To solve the above problem, a construction machine according to the present disclosure includes: a movable portion provided on an upper surface of a hood and pivotable along the upper surface of the hood; a fixer fixed to the upper surface of the hood to restrict a pivoting range of the movable portion; and a console supported by the movable portion.

The construction machine may include a guide to connect the movable portion to the fixer and guide the movable portion in a predetermined pivoting direction.

The movable portion may have an opening whose dimension in the pivoting direction is larger than that of the fixer, and the fixer may be located in the opening.

The construction machine may include a pivoting shaft provided on the upper surface of the hood that supports the movable portion in a pivotable manner, wherein the opening may have a trapezoidal or fan shape with a side of the pivoting shaft being narrowed.

The construction machine may include spacers provided on the upper surface of the hood that contact a lower surface of the movable portion.

The construction machine may include a first member provided in the fixer; and a second member provided in the movable portion that locks the movable portion by being connected to the first member.

The first member may have first member holes provided at multiple locations in the pivoting direction of the movable portion, and the second member may have second member projections that are accommodated in the first member holes.

The movable portion may have a grip.

The construction machine may have a first member provided in the fixer; and a second member provided in the movable portion that locks the movable portion by being connected to the first member, wherein the grip may be provided in the second member.

The construction machine may have a biasing member to bias the movable portion in one direction of the pivoting directions of the movable portion.

The first member may have a groove that guides the second member projections between a plurality of the first member holes.

The first member may have restrictor at either one end of the pivoting range of the second member projections that restricts pivoting of the second member projections.

The construction machine may have a pivoting shaft provided on the upper surface of the hood that supports the movable portion in a pivotable manner, wherein the spacers may be provided around the pivoting shaft.

The spacers may be arranged alongside the fixer.

### ADVANTAGEOUS EFFECTS OF INVENTION

The present disclosure can reduce interference between the console and obstacles.

### BRIEF DESCRIPTION OF DRAWINGS

FIG. 1 is a perspective view illustrating a construction machine according to an embodiment of the present disclosure,
FIG. 2 is a plan view showing a first embodiment of the present disclosure with left and right-side consoles separated from the driver's seat,
FIG. 3 is a plan view showing the first embodiment of the present disclosure with the left and right-side consoles in a situation close to the driver's seat,
FIG. 4 is a left side view illustrating a movable portion, a fixer and the console according to the first embodiment of the present disclosure,
FIG. 5 is a right side view illustrating the movable portion, the fixer and the console according to the first embodiment of the present disclosure,
FIG. 6 is a left side view illustrating the movable portion, the fixer, and the flipped-up console according to the first embodiment of the present disclosure,
FIG. 7 is a perspective view illustrating a lower frame according to the first embodiment of the present disclosure,
FIG. 8 is a view of FIG. 7 excluding a first member according to the first embodiment,
FIG. 9 is a perspective view illustrating the first member according to the first embodiment of the present disclosure,
FIG. 10 is a plan view illustrating the lower frame (excluding the first member) in a proximal position according to the first embodiment of the present disclosure,
FIG. 11 is a plan view illustrating the lower frame (excluding the first member) in a distal position according to the first embodiment of the present disclosure,
FIG. 12 is a plan view illustrating the lower frame (including the first member) in the proximal position according to the first embodiment of the present disclosure,
FIG. 13 is a plan view illustrating the lower frame (including the first member) in the distal position according to the first embodiment of the present disclosure,
FIG. 14 is a plan view illustrating the lower frame (excluding the first member) of the right-side console in the proximal position according to the first embodiment of the present disclosure,
FIG. 15 is a perspective view illustrating the first member according to an alternative of the first embodiment of the present disclosure,
FIG. 16 is a left side view illustrating the console according to the alternative of the first embodiment of the present disclosure,
FIG. 17 is a perspective view illustrating the lower frame according to a second embodiment of the present disclosure,
FIG. 18 is a view of FIG. 7 excluding the first member according to the second embodiment,
FIG. 19 is a perspective view illustrating the first member according to the second embodiment of the present disclosure,
FIG. 20 is a plan view illustrating the lower frame (excluding the first member) in the proximal position according to the second embodiment of the present disclosure, and
FIG. 21 is a plan view illustrating the lower frame (including the first member) in the proximal position according to the second embodiment of the present disclosure.

### DESCRIPTION OF EMBODIMENTS

### First Embodiment

Now, an explanation is given of the construction machine 1 according to a first embodiment of the present disclosure.

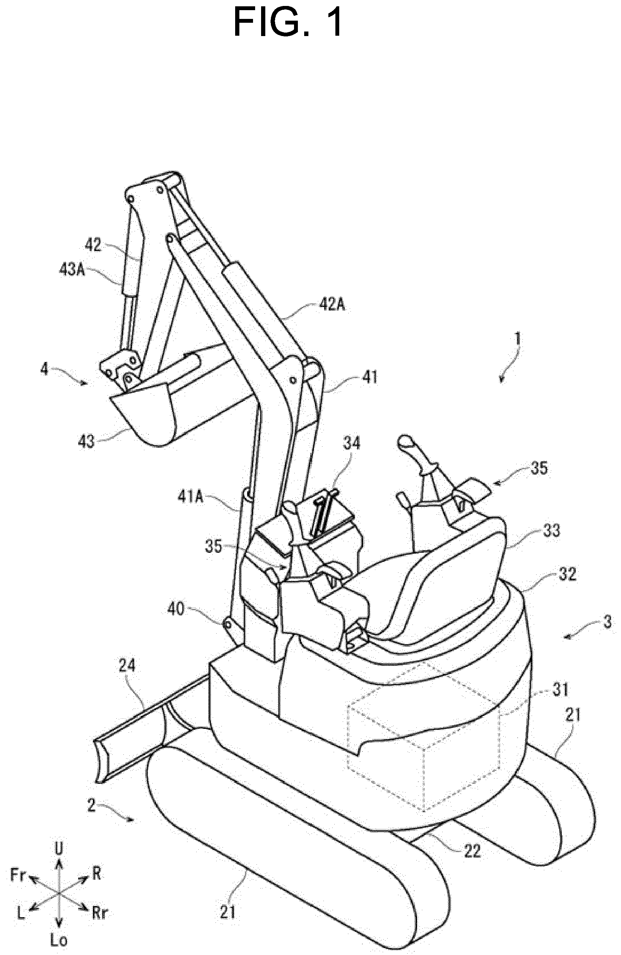

FIG. 1 is a perspective view of the exterior of the construction machine 1. The construction machine 1 is used at construction sites, demolition sites, mines, etc., and performs work in response to operator's operations. The construction machine 1 in the present embodiment is a hydraulic excavator that performs a work such as earth and sand excavation. Construction machine 1 has a lower traveling body 2, an upper revolving body 3, and a work machine 4. The upper revolving body 3 is installed above the lower traveling body 2, and the work machine 4 is installed at the front of the upper revolving body 3.

The lower traveling body 2 has a pair of crawlers 21 on left and right sides, a track frame 22, and a blade 24. The pair of crawlers 21 is powered by an engine 31 installed in the upper revolving body 3 and performs traveling and other operations of the construction machine 1. A track frame 22 is provided between the pair of crawlers 21 and supports the upper revolving body 3 in a revolvable manner. A blade 24 is used for leveling work, etc.

The upper revolving body 3 has the engine 31, a hood 32, a driver's seat 33, a travel lever 34, and consoles 35. The engine 31 is covered by the hood 32. The driver's seat 33 is located on an upper surface of the hood 32. A travel lever 34 is located in front of the driver's seat 33. The consoles 35 are located on left and right sides of the driver's seat 33 on the upper surface of the hood 32. The travel lever 34 is mainly used to operate the lower traveling body 2. The consoles 35 is mainly used to operate the work machine 4.

The work machine 4 performs various operations such as earth excavation, crushing, and earth removal in response to the operator's operation. The work machine 4 is installed on the upper revolving body 3 and is equipped with a boom 41, an arm 42, an attachment 43. In the present embodiment, a bucket for excavation work is provided as the attachment 43, but a breaker, auger, etc. may also be provided. The construction machine 1 is equipped with hydraulic actuators 41A, 42A, and 43A that drive the boom 41, the arm 42, and the attachment 43, respectively. In the construction machine 1, the hydraulic pump (not shown) driven by the power generated by the engine 31 supplies hydraulic oil from a tank (not shown) to the hydraulic actuators 41A, 42A, 43A, and 43A, and the hydraulic actuators 41A, 42A, 43A are pressurized by the hydraulic pump, as well as the hydraulic oil, whose direction and flow rate are regulated by the hydraulic pump (not shown), is used as the power transmission medium to drive the hydraulic actuators 41A, 42A, and 43A.

The boom 41 is installed on the upper revolving body 3 via a swing post 40 and can revolve with respect to the upper revolving body 3. The arm 42 is attached to the tip of the boom 41 and can pivot on a horizontal axis. The attachment 43 is provided at the tip of the arm 42 and can pivot on a horizontal axis.

Next, the construction machine 1 is described in detail (see FIGS. 1 through 13). The construction machine 1 has a movable portion 6 provided on the upper surface of the hood 32, which can pivot along the upper surface of the hood 32, a fixer 5 fixed to the upper surface of the hood 32, which restricts a pivoting range of the movable portion 6, and consoles 35 supported by the movable portion 6.

### Console

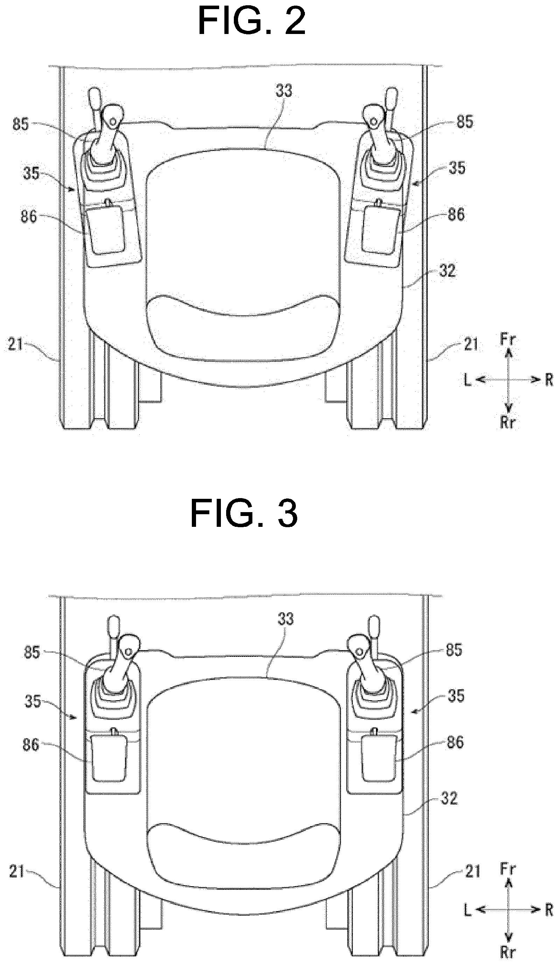

FIG. 2 is a plan view illustrating left and right-side consoles 35 in a situation away from the driver's seat 33 (referred to as a distal position). FIG. 3 is a plan view illustrating the left and right-side consoles 35 in a situation close to the driver's seat 33 (referred to as a proximal position). Since the left and right-side consoles 35 have a common configuration with some exceptions, only the left-side console 35 is described below. In regard to the right-side console 35, the differences from the left-side console 35 will be explained after the description of the left-side console 35.

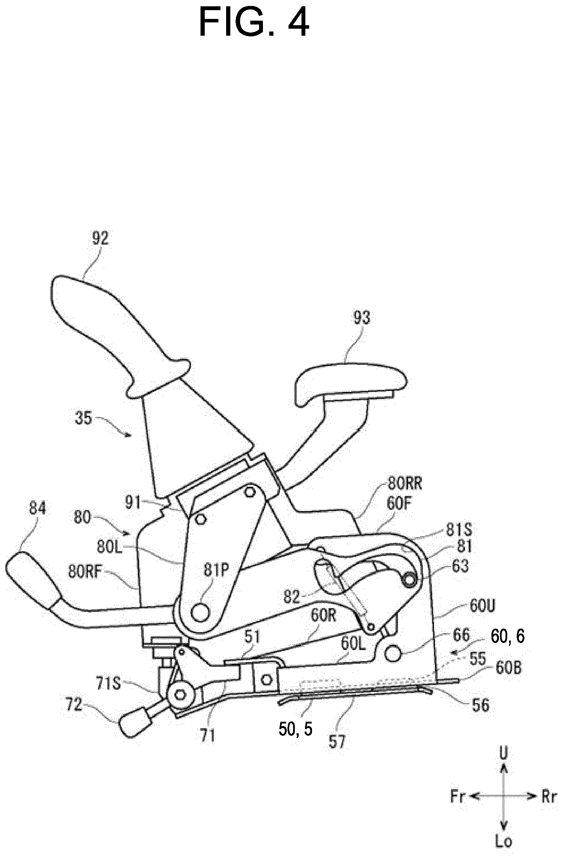

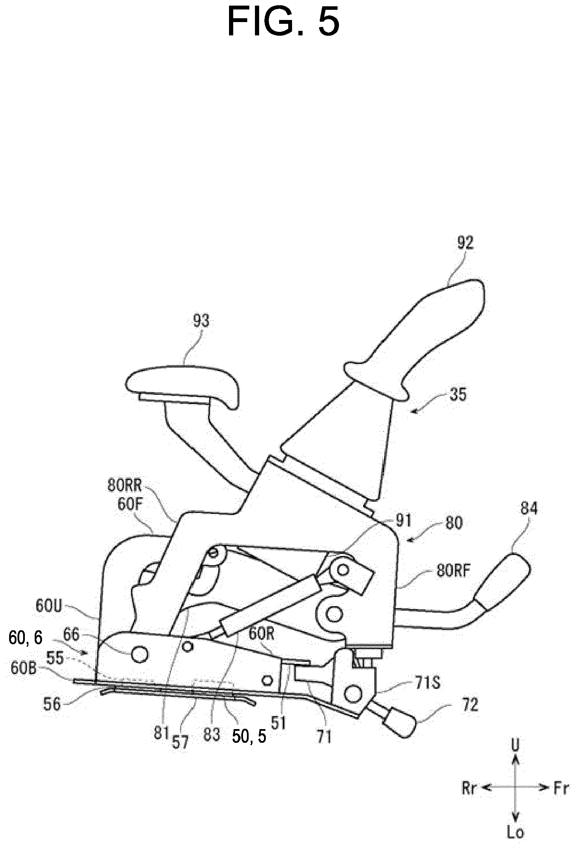

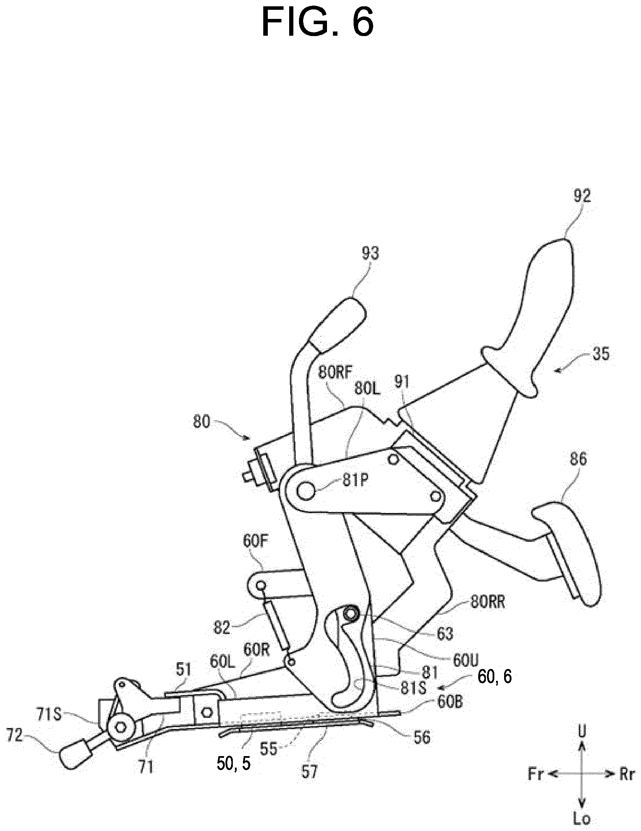

FIGS. 4 and 6 show left side views of the movable portion 6, the fixer 5, and the console 35. FIG. 5 is a right side view of the movable portion 6, the fixer 5 and the console 35. Of these, FIGS. 4 and 5 show the console 35 in a lowered situation (referred to as the lowered position), and FIG. 6 shows the console 35 in a raised situation (referred to as the raised position). The console 35 is equipped with a cutoff switch (not shown) that controls the shutoff of the hydraulic fluid connection, and the cutoff switch is turned on and off by the raising and lowering motion of the console 35. Therefore, in conjunction with the raising and lowering of the console 35, hydraulic oil is supplied or shut off from the hydraulic pump to the hydraulic actuators 41A, 42A, and 43A. In the lowered position, pilot oil is supplied to the control valve in response to the operation of a joystick 92. The control valve supplies hydraulic oil to the hydraulic actuators 41A, 42A, and 43A in a direction and a flow rate according to control of the pilot oil. This allows operation of the work machine 4 using the joystick 92. On the other hand, in the raised position, the pilot oil supply to the control valve is cut off, which makes it impossible to operate the work machine 4 using the joystick 92.

The lower frame 60 is provided on the upper surface of the hood 32. The lower frame 60 supports the upper frame 80. The upper frame 80 supports the console 35. The console 35 has a console base 91, a joystick 92, an armrest 93. The lower frame 60 and upper frame 80 are covered by a cover (not shown).

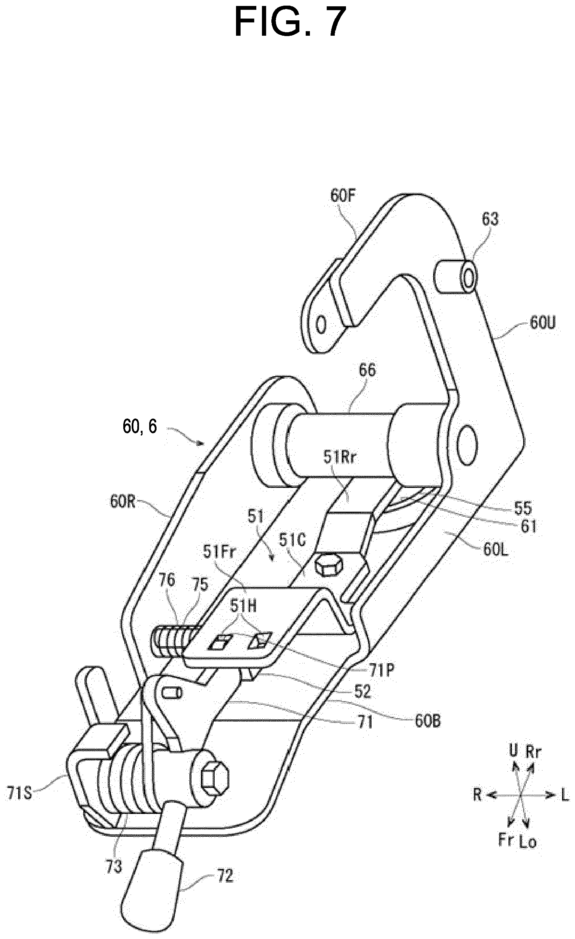

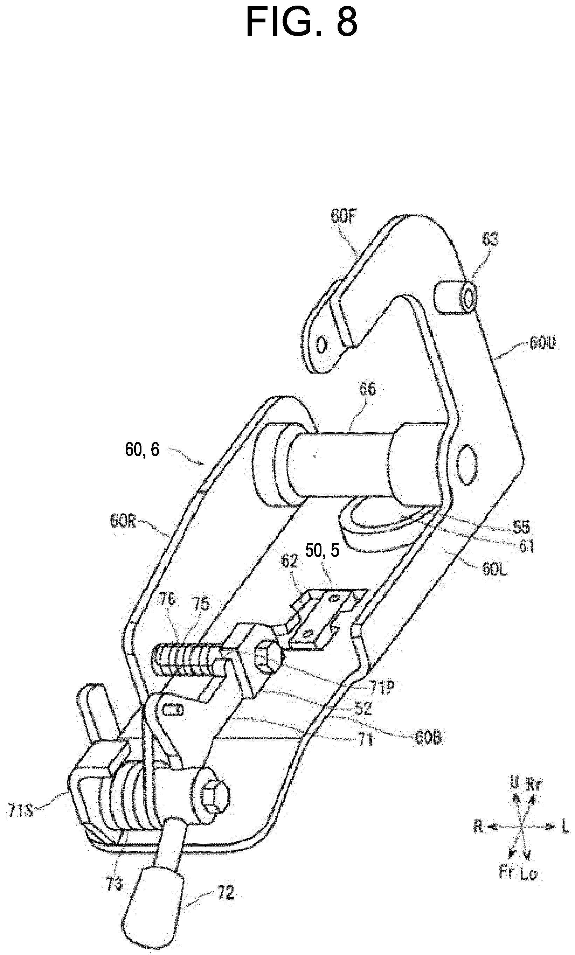

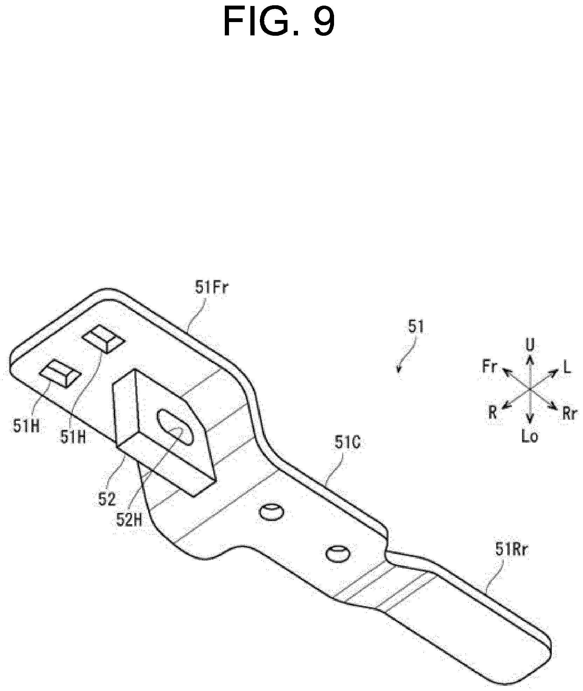

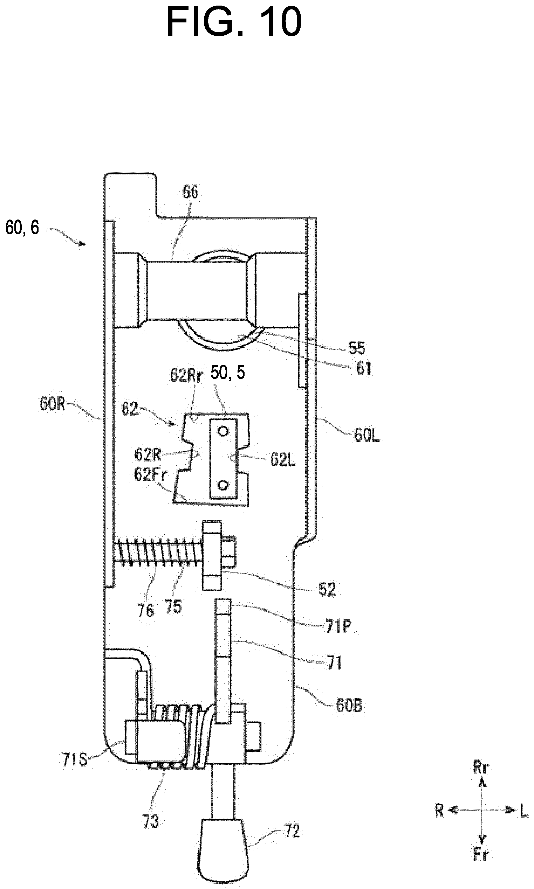

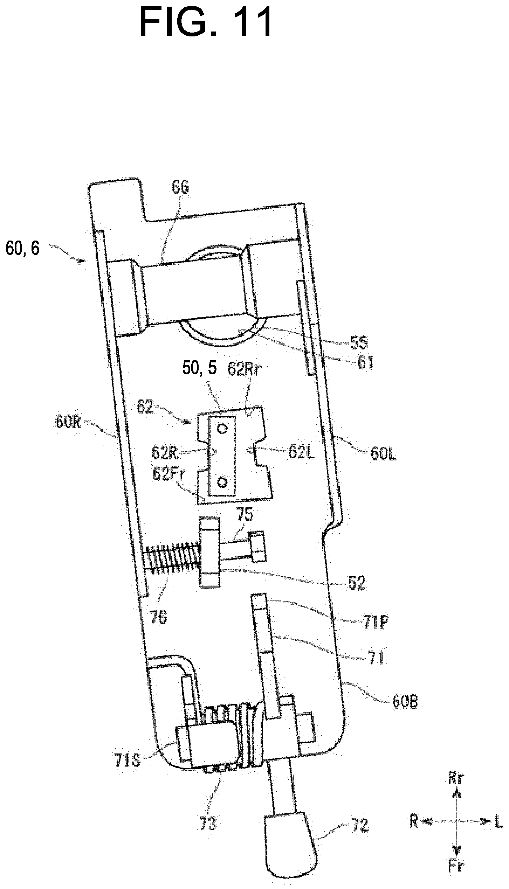

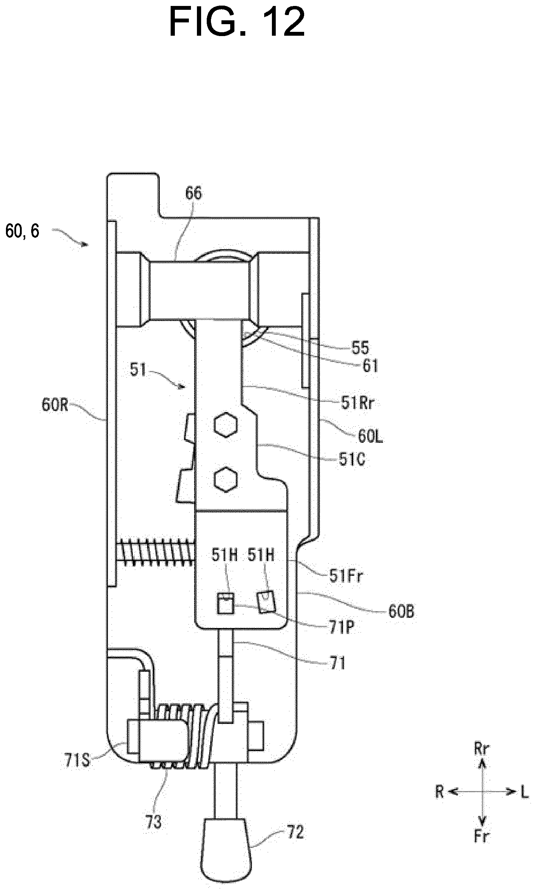

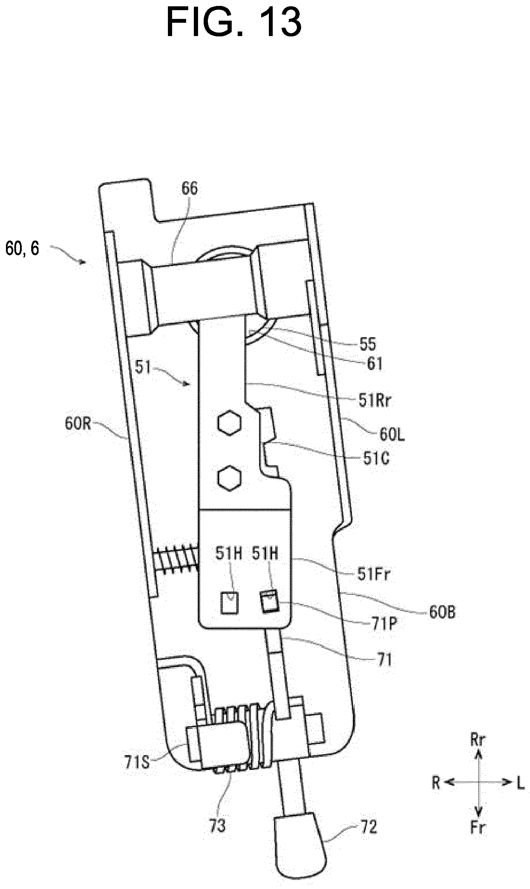

FIG. 7 is a perspective view showing the lower frame 60. FIG. 8 is a view of FIG. 7 excluding a first member 51. FIG. 9 is a perspective view showing the first member 51. FIG. 10 is a plan view showing the lower frame 60 (excluding the first member 51) in the proximal position. FIG. 11 is a plan view showing the lower frame 60 (excluding the first member 51) in the distal position. FIG. 12 is a plan view showing the lower frame 60 (including the first member 51) in the proximal position. FIG. 13 is a plan view showing the lower frame 60 (including the first member 51) in the distal position.

### Movable portion

The lower frame 60 is one example of the movable portion 6. The lower frame 60 includes a bottom 60B provided along the upper surface of the hood 32, a left side wall 60L provided above the left end of the bottom 60B, and a right side wall 60R provided above the right end of the bottom 60B. The rear end of the left side wall 60L has an upright portion 60U standing upwardly. The upper end of the upright portion 60U has a forward protrusion 60F projecting forward.

A pivoting shaft hole 61 is provided at the rear of the bottom 60B, which passes through it vertically. A raising-lowering shaft 66 is provided above the pivoting shaft hole 61, which supports the upper frame 80. The raising-lowering shaft 66 is supported by the left side wall 60L and the right side wall 60R. An opening 62 is provided at the center of the bottom 60B, which passes through the bottom vertically. A second member 71 and a grip 72 are provided in front of the bottom 60B.

A plate-like pedestal 57 is joined to the upper surface of the hood 32 (see FIGS. 4 through 6). A pivoting shaft 55, a spacer 56, and a convex portion 50 are provided on the upper surface of the pedestal 57. The pivoting shaft 55 is accommodated in the pivoting shaft hole 61 of the bottom 60B of the lower frame 60. This configuration allows the lower frame 60 to pivot along the upper surface of the hood 32 around the pivoting shaft 55. The spacer 56 is annularly provided around the pivoting shaft 55. The upper surface of the spacer 56 is lower than the upper surface of the pivoting shaft 55. By bringing the upper surface of the spacer 56 into contact with the lower surface of the bottom 60B of the lower frame 60, a gap equal to the thickness of the spacer 56 is formed between the lower frame 60 and the pedestal 57.

### Fixer

The convex portion 50 is one example of the fixer 5. The convex portion 50 is a rectangular-shaped member provided in front of the pivoting shaft 55. The convex portion 50 is joined to the pedestal 57. The opening 62 in the bottom 60B of the lower frame 60 is trapezoidal or fan-shaped, with the rear portion being narrowed, as a whole. Specifically, the opening 62 has a front edge 62Fr and rear edge 62Rr facing each other in the front-rear direction and a left edge 62L and right edge 62R facing each other in the left-right directions. The distance between a left edge 62L and a right edge 62R is wider in the forward direction. In this example, the centers of the left edge 62L and the right edge 62R protrude inward, but the left edge 62L and the right edge 62R may be formed in a straight line. The left-right dimension of the opening 62 is larger than the convex portion 50 throughout the entire front-rear direction. The convex portion 50 is placed in the opening 62. By bringing the left edge 62L or the right edge 62R of the opening 62 into contact with the convex portion 50, pivoting of the lower frame 60 is stopped.

The amount of protrusion of the protruding portions of the left and right edges 62L and 62R can be adjusted as appropriate, and in this embodiment, it is adjusted such that positioning of the console 35 is possible. Specifically, by bringing the protruding portion of the left edge 62L into contact with the convex portion 50, the console 35 is in a situation close to the driver's seat 33 (see Fig. 10). When the grip 72 is operated in this state, a second member projection 71P is inserted into a first member hole 51H on the right side (see Fig. 12). On the other hand, by bringing the protruding portion of the right edge 62R into contact with the convex portion 50, the console 35 is in a situation away from the driver's seat 33 (see FIG. 11). When the grip 72 is operated in this state, the second member projection 71P is inserted into the first member hole 51H on the left side (see Fig. 13).

The first member 51 is bolted to the upper surface of the convex portion 50. The first member 51 is a plate-shaped member whose longitudinal direction is the front-rear direction. A front portion 51Fr and a rear portion 51Rr of the first member 51 are higher than the center 51C. A sloping portion is provided between the front portion 51Fr and the center 51C, which becomes lower toward the rear direction. A sloping portion is provided between the rear portion 51Rr and the center 51C, which becomes lower toward the forward direction.

The front portion 51Fr of the first member 51 has two first member holes 51H arranged in the left-right direction, which pass through the first member vertically. A guide 52 protruding downward is provided on the lower surface of a portion in the rear of the first member hole 51H of the front portion 51Fr. The guide 52 has a guide hole 52H passing through itself in the left-right direction. The guide hole 52H is an elongate hole extending in the front-rear direction. For convenience of explanation, the guide 52 is depicted alone in FIGS. 10 and 11, but actually, the guide 52 is integral with the first member 51.

A rear portion 51Rr of the first member 51 is positioned above the pivoting shaft 55. The lower surface of the rear portion 51Rr may be in contact with the upper surface of the pivoting shaft 55, or a gap of about 1mm may be provided therebetween. The rear portion 51Rr serves to prevent the lower frame 60 from exiting the pivoting shaft 55 by the lower frame 60 being lifted up.

A right side wall 60R of the lower frame 60 has a bar-shaped member 75 protruding to the left side. A left end of the bar-shaped member 75 is accommodated in the guide hole 52H of the guide 52. This configuration allows the lower frame 60 to be guided in a predetermined pivoting direction. The predetermined pivoting direction is the longitudinal direction of the bar-shaped member 75, in other words, a direction along a circumference whose center is the pivoting shaft 55. Although the bar-shaped member 75 can be extended from the right side wall 60R to the left side wall 60L of the lower frame 60, by providing one end thereof either on the right side wall 60R or on the left side wall 60L of the lower frame 60 and accommodating the other end thereof in the guide hole 52H, interference with other members can be avoided and the degree of freedom of layout can be improved. Furthermore, the mounting position of the bar-shaped member 75 on the right side wall 60R and the guide 52 can be changed by bolts or other fastening members. This allows a pivotable range of the console 35 in the left right direction to be restricted by the mounting position of the bar-shaped member 75.

The bar-shaped member 75 is surrounded by a biasing member 76. Specifically, the biasing member 76 is provided between the right side wall 60R and the guide 52. The biasing member 76 is a compression coil spring, for example. As a result, as shown in FIGS. 10 and 11, the biasing member 76 biases the lower frame 60 with respect to the guide 52 to the right direction, i.e., to a direction closer to the driver's seat 33. According to this configuration, when the operator does not operate the console 35 to expand or contract, the console 35 is kept close to the driver's seat 33. This prevents the console 35 from protruding outside the body of the construction machine 1, and prevents the console 35 from coming into contact with surrounding obstacles due to the traveling motion, etc. of the construction machine 1.

In this embodiment, although the biasing member 76 is located so as to bias the lower frame 60 in a direction closer to the driver's seat 33, the biasing member 76 may be located so as to bias the lower frame 60 in a direction away from the driver's seat 33. In this embodiment, by biasing the lower frame 60 in the direction closer to the driver's seat 33, it is possible to reduce the effort of the movement to pull the console 35 toward the driver's seat 33, which requires more effort.

The second member 71 is a member whose longitudinal direction is the front-rear direction. The rear end of the second member 71 has a second member projection 71P protruding upward. The front end of the second member 71 is supported by the second member support 71S provided at the bottom 60B of the lower frame 60. The second member 71 is rotatable in the vertical direction around the second member support 71S. The second member 71 is biased upward with a torsion coil spring 73 provided in the second member support 71S. The second member 71 is biased upward, so that the second member projection 71P is connected to the first member hole 51H, and the pivoting of the lower frame 60 is locked.

The grip 72 protrudes forward from the front end of the second member 71. Since the grip 72 is rigidly coupled to the second member 71, by pulling up the grip 72, the second member 71 rotates downward. As a result, the second member projection 71P is dislocated from the first member hole 51H, thereby unlocking the lower frame 60.

Next, an upper frame 80 is described. The upper frame 80 supports a console base 91. The upper frame 80 includes a left leg 80L provided on the left lower side of the console base 91, a right rear leg 80RR provided on the right rear lower side of the console base 91, and a right front leg 80RF provided on the right front lower side of the console base 91.

The right rear leg 80RR is coupled to the raising-lowering shaft 66. The right front leg 80RF and the right side wall 60R of the lower frame 60 are connected by a damper 83. A left connecting member 81 is a plate-shaped member. One end of the left connecting member 81 is connected to the left leg 80L via a pin 81P. An S-shaped slit 81S is provided on the other end of the left connecting member 81. The upright portion 60U of the lower frame 60 has a boss 63 protruding to the left. The boss 63 is accommodated within the slit 81S. The boss 63 is provided with a bush, rotation of the bush allows the boss 63 to move into the slit 81S smoothly. A tensile coil spring 82 is connected to the other end of the left connecting member 81 and the forward protrusion 60F of the lower frame 60. A rotary axis (not shown) rotatable in the vertical direction is provided between the left leg 80L and the right front leg 80RF, and the grip 84 is axially supported by this rotary axis. By raising and lowering the grip 84, the upper frame 80 and console 35 are raised and lowered around the raising and lowering shaft 66. Specifically, when the grip 84 is raised from the lowered position, the pin 81P rotates upward with the raising and lowering shaft 66 as the fulcrum, and at a certain point, the pin 81P switches to a rotation with the raising and lowering shaft 66 as the fulcrum.

As mentioned above, in the lowered position, the hydraulic pump is activated and the work machine 4 can be operated using the console 35. On the other hand, in the raised position, the hydraulic pump is stopped and the work machine 4 cannot be operated using the console 35. The raising and lowering movement of the console 35 around the raising and lowering shaft 66 is independent of the pivoting movement of the console 35 around the pivoting shaft 55. Therefore, operation of the work machine 4 using the console 35 and raising and lowering of the console 35 is possible at any position within the pivoting range of the console 35, but the position of the console 35 is fixed by connecting the second member projection 71P to the first member hole 51H, the position of the console 35 is fixed, thereby improving the stability of operation and raising and lowering.

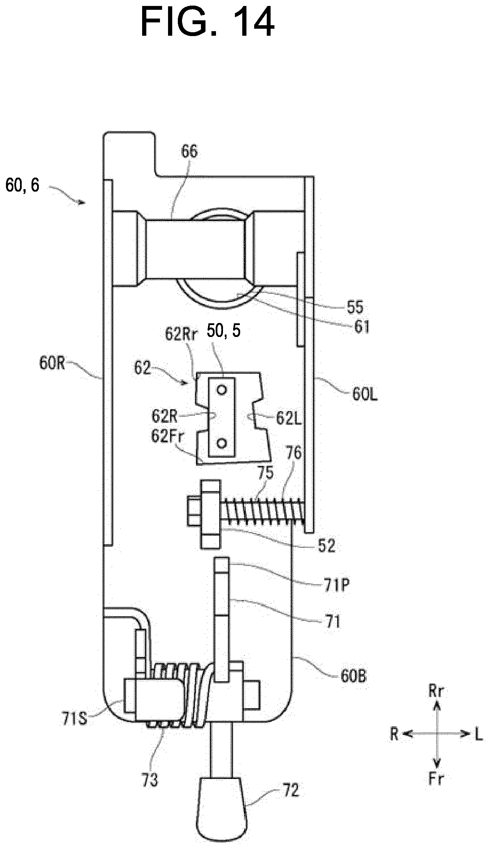

Next, the differences of the right-side console 35 from the left-side console 35 are explained. FIG. 14 is a plan view showing the lower frame 60 (excluding the first member 51) of the right-side console 35 in the proximal position. The lower frame 60 shown in FIG. 14 is a counterpart of the lower frame 60 of the left-side console 35 shown in FIG. 10.

As mentioned above, in the lower frame 60 on the left side (see Fig. 10), the bar-shaped member 75 and the biasing member 76 are provided on the right side of the lower frame 60. On the other hand, in the lower frame 60 on the right side, a bar-shaped member 75 and the biasing member 76 are provided in the lower frame 60 on the left side.

The left side wall 60L of the lower frame 60 has a bar-shaped member 75 protruding to the right. The right end of the bar-shaped member 75 is accommodated in the guide hole 52H of the guide 52. This configuration allows the lower frame 60 to be guided in a predetermined pivoting direction. The bar-shaped member 75 is surrounded by the biasing member 76. The biasing member 76 biases the lower frame 60 through the guide 52 in the left direction, i.e., in the direction closer to the driver's seat 33.

The construction machine 1 according to the present embodiment described above includes: a movable portion 6 provided on the upper surface of the hood 32 and capable of pivoting along the upper surface of the hood 32; a fixer 5 fixed to the upper surface of the hood 32 and restricting the pivoting range of the movable portion 6; and a console 35 supported by the movable portion 6. According to this configuration, the console 35 does not protrude outside of the machine body, thereby reducing interference between the console 35 and obstacles while the construction machine 1 is in motion. A space between the left and right-side consoles 35 can be expanded or contracted when there is no risk of interference between the consoles 35 and the obstacles. According to the construction machine 1 of the present embodiment, the console 35 can be operated at any position within the pivoting range of the movable portion 6. Also, according to the construction machine 1 of the present embodiment, by covering the consoles 35 with a cover, only when the consoles 35 are raised and lowered, the consoles 35 can be pivoted in the left-right direction (in the width direction of the construction machine). This prevents unintended left-right pivoting by the operator. Also, by exposing the grip 72 of the console 35 without covering it with a cover, even when the console 35 is in the lowered position, since the grip 72 can be operated, the console 35 can be pivoted to the left right direction without raising or lowering the console 35.

According to the construction machine 1 of the present embodiment, the movable portion 6 is connected to the fixer 5, and the construction machine 1 includes the guide 52 that guides the movable portion 6 in the predetermined pivoting direction, thereby stabilizing the pivoting of the movable portion 6.

According to the construction machine 1 of the present embodiment, the movable portion 6 has the opening 62 whose dimension in the pivoting direction is larger than that of the fixer 5, and the fixer 5 is located in the opening 62, so that the pivoting range of the movable portion 6 can be restricted with a simple configuration.

According to the construction machine 1 of the present embodiment, a pivoting shaft 55 is provided on the upper surface of the hood 32 and supports the movable portion 6 in a pivotable manner, and the opening 62 is trapezoidal or fan-shaped with the side of the pivoting shaft 55 being narrower, thereby facilitating the operation of pivoting the console 35.

According to the construction machine 1 of the present embodiment, the spacer 56 is provided on the upper surface of the hood 32 and contacts the lower surface of the movable portion 6, thereby pivoting the movable portion 6 smoothly.

According to the construction machine 1 of the present embodiment, it includes the first member 51 provided in the fixer 5, and the second member 71 provided in the movable portion 6, which locks the movable portion 6 by being connected to the first member 51, so that the console 35 can be fixed in position.

According to the construction machine 1 of the present embodiment, the first member 51 has the first member holes 51H provided at a plurality of positions in the pivoting direction of the movable portion 6, and the second member 71 has the second member projection 71P accommodated in the first member hole 51H, so that the console 35 can be fixed in multiple positions.

According to the construction machine 1 of the present embodiment, the movable portion 6 has a grip 72, thereby facilitating the operation of pivoting the console 35.

According to the construction machine 1 of the present embodiment, the construction machine 1 has a first member 51 provided in the fixer 5, and a second member 71 provided in the movable portion 6, which locks the movable portion 6 by being connected to the first member 51, and the grip 72 is provided on the second member 71, thereby facilitating locking and unlocking operations.

In addition, according to the construction machine 1 of the present embodiment, the movable portion 6 has a biasing member 76 to bias the movable portion 6 in one direction of the pivoting direction of the movable portion 6, thereby reducing the effort to pivoting the console 35 to a direction closer to the driver's seat 33.

According to the construction machine 1 of the present embodiment, it includes a pivoting shaft 55 provided on the upper surface of the hood 32 and supporting the movable portion 6 in a pivotable manner, and the spacer 56 is provided around the pivoting shaft 55, thereby pivoting the movable portion 6 smoothly.

Alternative embodiment of the first embodiment The above described embodiment may be modified as follows.

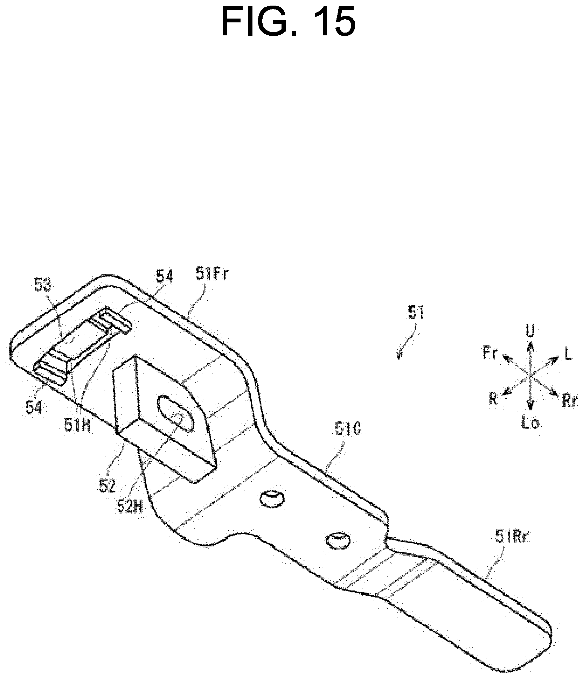

FIG. 15 is a perspective view illustrating the first member 51 according to an alternative embodiment. The first member 51 is equipped with a groove 53 that guides the second member projections 71P between the plurality of first member holes 51H. The groove 53 is provided on the lower surface of the front portion 51Fr of the first member 51 to connect a plurality of first member holes 51H. This configuration allows the second member 71 to rotate smoothly.

The first member 51 has at both ends of the pivoting range of the movable portion 6 a restrictor 54 that restricts the movement of the second member projection 71P. The restrictor 54 protrudes from the lower surface of the front portion 51Fr of the first member 51. The restrictor 54 is provided on the right of the first member hole 51H on the right side and on the left of the first member hole 51H on the left side. This configuration prevents the second member projection 71P from deviating from the pivoting range. The restrictor 54 can be provided only at either end of the pivoting range of the movable portion 6, for example, only at the end of the side that is biased by the biasing member 76.

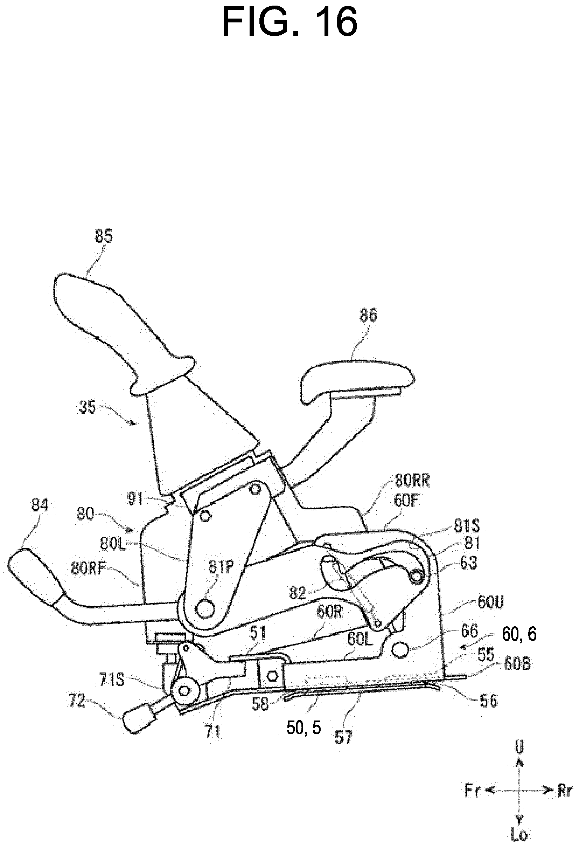

FIG. 16 is a left side view of the console 35 according to the alternative embodiment. The console 35 has a spacer 58 adjacent to the fixer 5 in addition to the spacer 56 in the above described embodiment. According to this configuration, a gap is also formed on the fixer 5 side, so that the console 35 can be stably supported even when the center of gravity of the console 35 is moved forward, the movable portion 6 can be pivoted smoothly.

In the above embodiment, an example is shown in which the console 35 pivots around the pivoting shaft 55, but the console 35 may be configured to slide in the left-right direction. For example, instead of the pivoting shaft 55, a rail or groove provided on the upper surface of the hood 32 may be configured so that the lower frame 60 can slide along the rail or groove whose longitudinal direction is the left-right direction. This configuration also aims to reduce interference between the console 35 and obstacles.

In the above embodiment, an example is shown in which the first member hole 51H is provided at two locations in the pivoting direction of the movable portion 6, however, the first member hole 51H may be provided at three or more locations in the pivoting direction.

### Second Embodiment

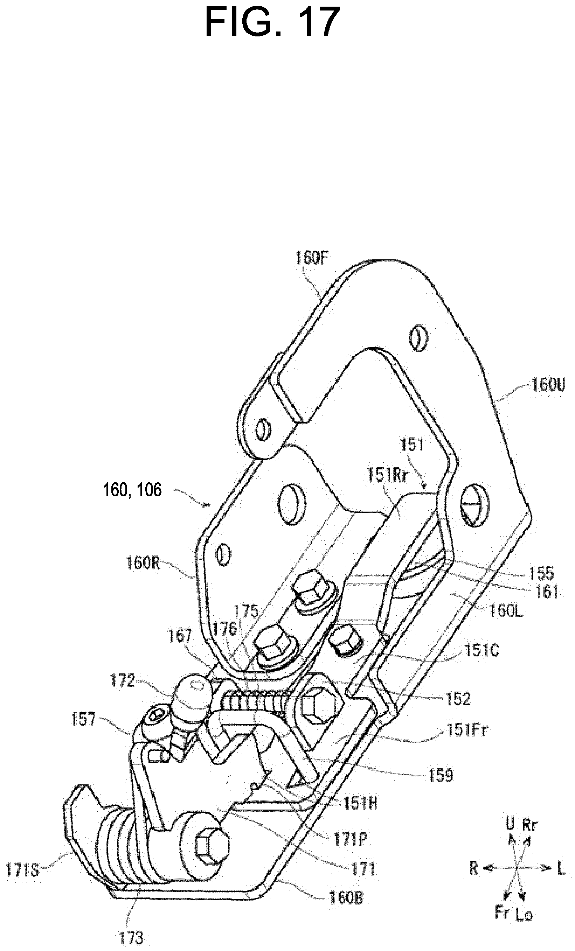

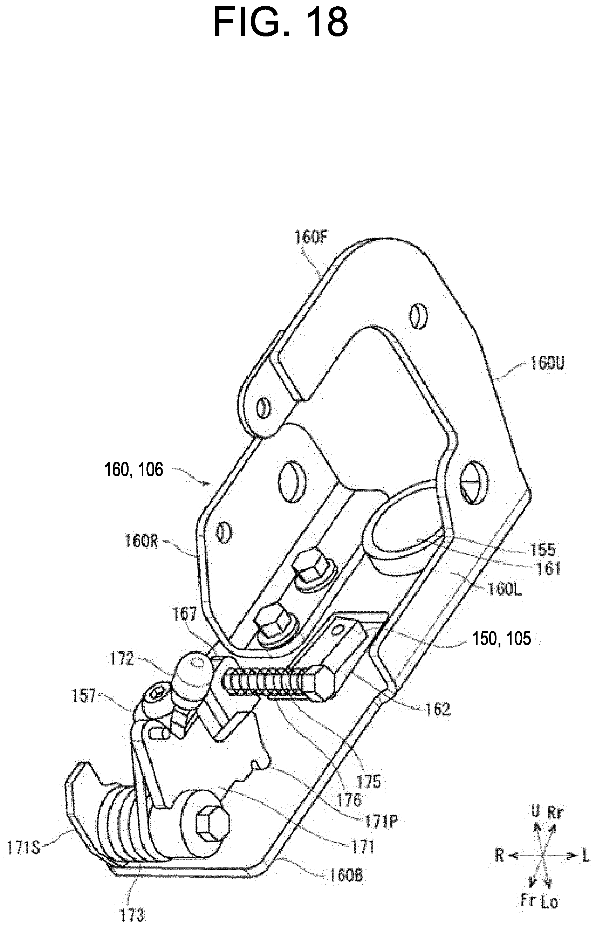

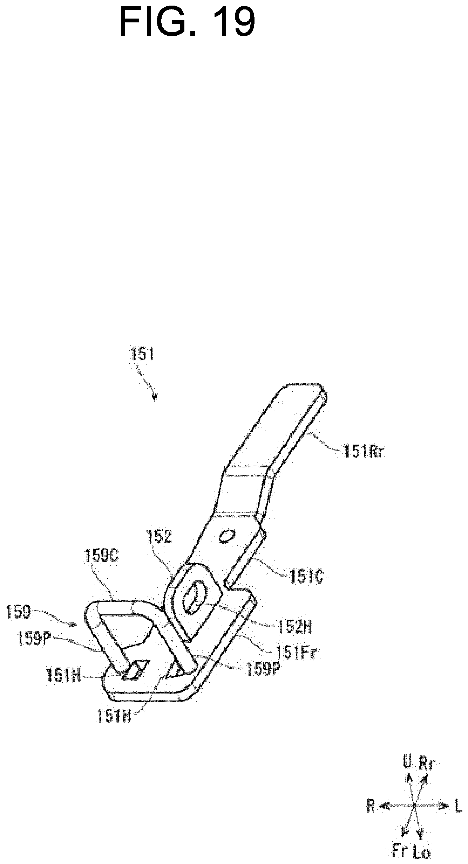

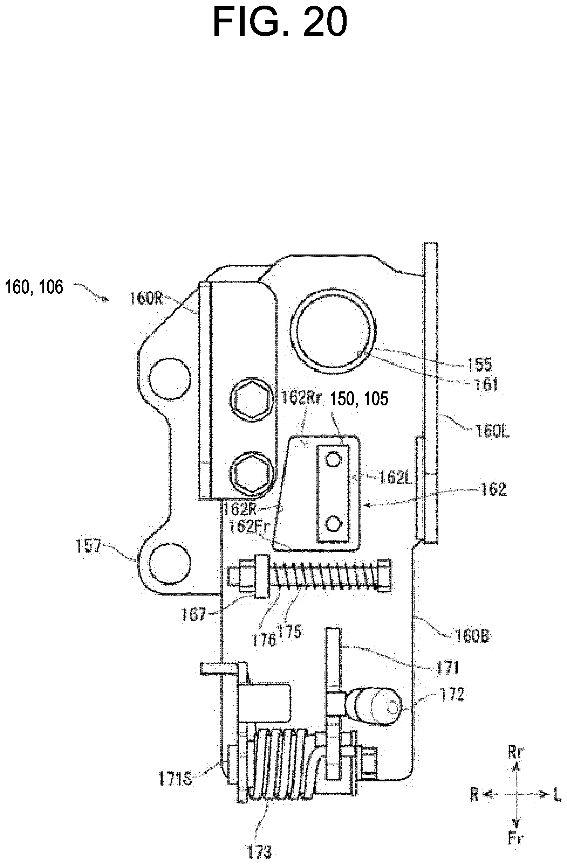

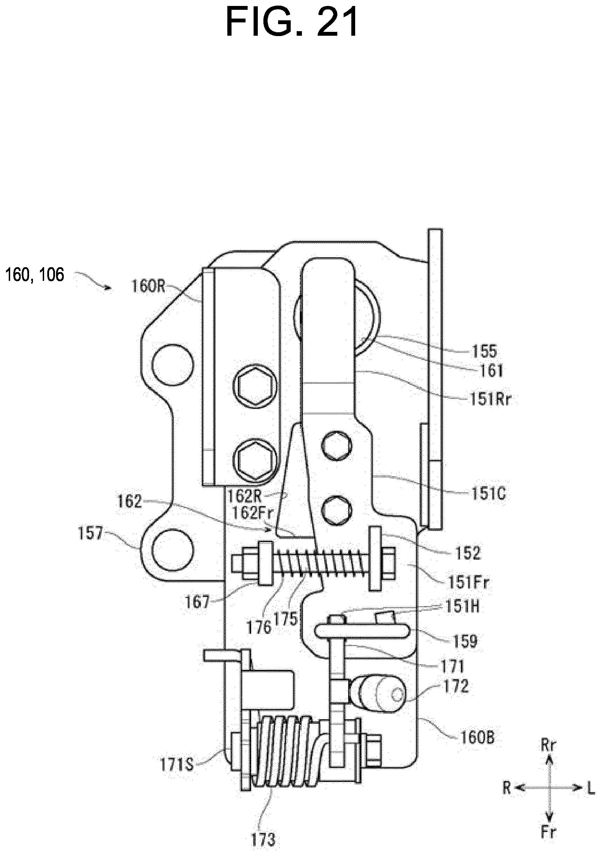

Next, the construction machine 1 according to the second embodiment of the present disclosure is described in detail below. The following is a description about the lower frame 160 which is the main difference of the second embodiment with respect to the first embodiment. FIG. 17 is a perspective view showing the lower frame 160. FIG. 18 is a view of FIG. 17 excluding the first member 151. FIG. 19 is a perspective view showing the first member 151. FIG. 20 is a plan view showing the lower frame 160 (excluding the first member 151) in a proximal position. FIG. 21 is a plan view showing the lower frame 160 (including the first member 151) in the proximal position.

### Movable portion

The lower frame 160 is one example of a movable portion 106. The lower frame 160 includes a bottom 160B provided along the upper surface of the hood 32, a left side wall 160L provided above the left end of the bottom 160B, and a right side wall 160R provided above the right end of the bottom 160B. An upright portion 160U standing upward is provided at the rear end of the left side wall 160L. The upper end of the upright portion 160U has a forward protrusion 160F projecting forward.

A pivoting shaft hole 161 is provided at the rear of the bottom 160B, which passes through the bottom vertically. An opening 162 is provided at the center of the bottom 160B, which passes through the bottom vertically (see FIGS. 18, 20, and 21). A second member 171 and a grip 172 are provided in front of the bottom 160B. A configuration similar to the raising-lowering shaft 66 of the first embodiment is provided above the pivoting shaft hole 161, but explanation thereof is omitted.

A plate-like pedestal 157 is joined to the upper surface of the hood 32. A pivoting shaft 155 and a convex portion 150 are provided on the upper surface of the pedestal 157. The pivoting shaft 155 is accommodated in the pivoting shaft hole 161 of the bottom 160B of the lower frame 160. This configuration allows the lower frame 160 to pivot along the upper surface of the hood 32 around the pivoting shaft 155. A configuration similar to the spacer 56 of the first embodiment is provided on the upper surface of the pedestal 157, but explanation thereof is omitted.

### Fixer

The convex portion 150 (see FIGS. 18 and 20) is one example of the fixer 105. The convex portion 150 is a rectangular-shaped member provided in front of the pivoting shaft 155. The convex portion 150 is joined to the pedestal 157. The opening 162 in the bottom 160B of the lower frame 160 is trapezoidal or fan-shaped, with the rear portion being narrowed as a whole. Specifically, the opening 162 has a front edge 162Fr and rear edge 162Rr facing each other in the front-rear direction and a left edge 162L and right edge 162R facing each other in the left-right direction. The distance between the left edge 162L and the right edge 162R is wider in the forward direction. In this example, the left edge 162L and the right edge 162R are formed in a straight line, but the centers of the left edge 162L and the right edge 162R may protrude inwardly. When the lower frame 160 is pivoted linearly in the left-right direction, a gap between the left edge 162L and right edge 162R of the opening 162 may be even across the front-rear direction. The left-right dimension of the opening 162 is larger than the convex portion 150 throughout the entire front-rear direction. The convex portion 150 is placed in the opening 162. By bringing the left edge 162L or the right edge 162R of the opening 162 into contact with the convex portion 150, pivoting of the lower frame 160 is stopped.

The first member 151 (see FIGS. 17, 19 and 21) is bolted to the upper surface of the convex portion 150. The first member 151 is a plate-shaped member whose longitudinal direction is the front-rear direction. A rear portion 151Rr of the first member 151 is higher than the center 151C and the front portion 151Fr. A sloping portion is provided between the rear portion 151Rr and the center 151C, which becomes lower toward the forward direction.

The front portion 151Fr of the first member 151 has two first member holes 151H arranged in the left-right direction, which pass through the first member vertically. A guide 152 protruding upward is provided on the upper surface of a portion in the rear of the first member hole 151H of the front portion 151Fr. The guide 152 has a guide hole 152H passing through itself in the left-right direction. The guide hole 152H is an elongate hole extending in the front-rear direction.

A rear portion 151Rr of the first member 151 is positioned above the pivoting shaft 155. The lower surface of the rear portion 151Rr may be in contact with the upper surface of the pivoting shaft 155, or a gap of about 1mm may be provided therebetween. The rear portion 151Rr serves to prevent the lower frame 160 from exiting the pivoting shaft 155 by the lower frame 160 being lifted up.

A support 167 projecting upward is provided in right-front of the opening 162 and on the upper surface of the lower frame 160. The support 167 has a bar-shaped member 175 protruding to the left. A left end of the bar-shaped member 175 is accommodated in the guide hole 152H of the guide 152. This configuration allows the lower frame 160 to be guided in a predetermined pivoting direction. The predetermined pivoting direction is the longitudinal direction of the bar-shaped member 175, in other words, a direction along a circumference whose center is the pivoting shaft 155.

The bar-shaped member 175 is surrounded by the biasing member 176. Specifically, the biasing member 176 is provided between the support 167 and the guide 152. The biasing member 176 is a compression coil spring, for example. As a result, the biasing member 176 biases the lower frame 160 with respect to the guide 152 to the right direction, i.e., to a direction closer to the driver's seat 33. According to this configuration, when the operator does not operate the console 35 to expand or contract, the console 35 is kept close to the driver's seat 33. This prevents the console 35 from protruding outside the body of the construction machine 1, and prevents the console 35 from coming into contact with surrounding obstacles due to the traveling motion, etc. of the construction machine 1.

In this embodiment, although the biasing member 176 is located so as to bias the lower frame 160 in a direction closer to the driver's seat 33, the biasing member 176 may be located so as to bias the lower frame 160 in a direction away from the driver's seat 33. In this embodiment, by biasing the lower frame 160 in the direction closer to the driver's seat 33, it is possible to reduce the effort of the movement to pull the console 35 toward the driver's seat 33, which requires more effort.

The second member 171 is a member whose longitudinal direction is the front-rear direction. The rear end of the second member 171 has a second member projection 171P protruding downward (see FIGS. 17 and 18). The front end of the second member 171 is supported by the second member support 171S provided at the bottom 160B of the lower frame 160. The second member 171 is rotatable in the vertical direction around the second member support 171S. The second member 171 is biased downward with a torsion coil spring 173 provided in the second member support 171S. The second member 171 is biased downward, so that the second member projection 171P is engaged with the first member hole 151H, and the pivoting of the lower frame 160 is locked.

The grip 172 protrudes upward from the second member 171. By pushing the grip 172 forward, the second member 171 rotates upward, so that the second member projection 171P is dislocated from the first member hole 151H, thereby unlocking the lower frame 160.

A restrictor 159 (see FIG. 19) is located on the upper surface of the front part of the first member 151. The restrictor 159 has a protrusion 159P provided on the right side of the right-side first member hole 151H, a protrusion 159P provided on the left side of the left-side first member hole 151H, and a connection portion 159C connecting the upper ends of the left and right side protrusions 159P. When the lower frame 160 is pivoted to the right, the second member 171 contacts the right side protrusion 159P, thereby restricting the lower frame 160 from pivoting to the right. When the lower frame 160 is pivoted to the left, the second member 171 contacts the left side protrusion 159P, thereby restricting the lower frame 160 from pivoting to the left. The connection portion 159C may not be provided.

According to the embodiment described above, since the grip 172 protrudes upward from the second member 171, the front-rear length of the lower frame 160 can be shortened than that of the first embodiment. In addition, the shape of the first member 151 is simpler than that of the first embodiment, thereby making it easier to process. In addition, since the bar-shaped member 175 is supported by a support 167 provided separately from the right side wall 160R, the right side wall 160R can be made smaller. In addition, since the restrictor 159 is provided, it is possible to restrict the pivoting range of the lower frame 160.

Also, by engaging the second member projection 171P with the first member hole 151H from above, the grip 172 can be placed above the second member 171. By placing the grip 172 above the second member 171, the console 35 can be suppressed from projecting forward, and thus the console 35 can be made more compact. When the console 35 is flipped up, a wider space in front of the console 35 can be secured, so that more space can be provided for the driver to get in and out of the car, thereby facilitating the getting in and out operation. In addition, the above configuration allows for a wider space in front of the console 35 as well as shorter distance between the driver and the grip 172, which makes it easier to pivot the lower frame 160 in the left-right direction using the grip 172. Furthermore, this configuration enables the grip 72 to be directly attached to the second member 71 without a support rod, thereby reducing the number of parts. By engaging the second member projection 171P with the first member hole 151H from above, the grip 172 can be placed above the second member 171.

### Appendix

The present disclosure may be identified as follows.

### Appendix 1

A construction machine comprising: a movable portion provided on an upper surface of a hood and pivotable along the upper surface of the hood;
a fixer fixed to the upper surface of the hood to restrict a pivoting range of the movable portion; and
a console supported by the movable portion.

### Appendix 2

The construction machine according to Appendix 1 further comprising a guide to connect the movable portion to the fixer and guide the movable portion in a predetermined pivoting direction.

### Appendix 3

The construction machine according to Appendix 1 or 2, wherein the movable portion has an opening whose dimension in the pivoting direction is larger than that of the fixer, and the fixer is located in the opening.

### Appendix 4

The construction machine according to Appendix 3 further comprising a pivoting shaft provided on the upper surface of the hood that supports the movable portion in a pivotable manner, wherein the opening has a trapezoidal or fan shape with a side of the pivoting shaft being narrowed.

### Appendix 5

The construction machine according to any one of Appendix 1 to 4 further comprising spacers provided on the upper surface of the hood that contact a lower surface of the movable portion.

### Appendix 6

The construction machine according to any one of Appendix 1 to 5 further comprising: a first member provided in the fixer; and a second member provided in the movable portion that locks the movable portion by being connected to the first member.

### Appendix 7

The construction machine according to Appendix 6, wherein the first member has first member holes provided at multiple locations in the pivoting direction of the movable portion, and the second member has second member projections that are accommodated in the first member holes.

### Appendix 8

The construction machine according to any one of Appendix 1 to 7, wherein the movable portion has a grip.

### Appendix 9

The construction machine according to any one of Appendix 1 to 5 further comprising: a first member provided in the fixer; and a second member provided in the movable portion that locks the movable portion by being connected to the first member, wherein the grip is provided in the second member.

### Appendix 10

The construction machine according to any one of Appendix 1 to 9 further comprising a biasing member to bias the movable portion in one direction of the pivoting directions of the movable portion.

### Appendix 11

The construction machine according to Appendix 7, wherein the first member has a groove that guides the second member projections between a plurality of the first member holes.

### Appendix 12

The construction machine according to Appendix 7 or 11, wherein the first member has a restrictor at either one end of the pivoting range of the second member projections that restricts pivoting of the second member projections.

### Appendix 13

The construction machine according to Appendix 3 further comprising a pivoting shaft provided on the upper surface of the hood that supports the movable portion in a pivotable manner, wherein the spacers are provided around the pivoting shaft.

### Appendix 14

The construction machine according to Appendix 5 or 13, wherein the spacers are arranged alongside the fixer.

### REFERENCE SIGNS LIST

1 Construction machine
5 Fixer
6 Movable portion
32 Hood
35 Console
51 First member
51H First member hole
52 Guide
53 Groove
54 Restrictor
55 Pivoting shaft
56 Spacer
58 Spacer
62: Opening
71 Second member
71P Second member projection
72 Grip
76 Biasing member

## Claims

1. A construction machine comprising:
a movable portion provided on an upper surface of a hood and pivotable along the upper surface of the hood;
a fixer fixed to the upper surface of the hood to restrict a pivoting range of the movable portion; and
a console supported by the movable portion.

2. The construction machine according to claim 1 further comprising
a guide to connect the movable portion to the fixer and guide the movable portion in a predetermined pivoting direction.

3. The construction machine according to claim 1 or 2, wherein
the movable portion has an opening whose dimension in the pivoting direction is larger than that of the fixer, and
the fixer is located in the opening.

4. The construction machine according to claim 3 further comprising
a pivoting shaft provided on the upper surface of the hood that supports the movable portion in a pivotable manner,
wherein the opening has a trapezoidal or fan shape with a side of the pivoting shaft being narrowed.

5. The construction machine according to claim 1 further comprising
spacers provided on the upper surface of the hood that contact a lower surface of the movable portion.

6. The construction machine according to claim 1 further comprising:
a first member provided in the fixer; and
a second member provided in the movable portion that locks the movable portion by being connected to the first member.

7. The construction machine according to claim 6, wherein
the first member has first member holes provided at multiple locations in a pivoting direction of the movable portion, and
the second member has second member projections that are accommodated in the first member holes.

8. The construction machine according to claim 1, wherein
the movable portion has a grip.

9. The construction machine according to claim 8 further comprising:
a first member provided in the fixer; and
a second member provided in the movable portion that locks the movable portion by being connected to the first member,
wherein the grip is provided in the second member.

10. The construction machine according to claim 1 further comprising
a biasing member to bias the movable portion in one direction of pivoting directions of the movable portion.

11. The construction machine according to claim 7, wherein
the first member has a groove that guides the second member projections between a plurality of the first member holes.

12. The construction machine according to claim 7 or 11, wherein
the first member has a restrictor at either one end of the pivoting range of the second member projections that restricts pivoting of the second member projections.

13. The construction machine according to claim 5 further comprising
a pivoting shaft provided on the upper surface of the hood that supports the movable portion in a pivotable manner,
wherein the spacers are provided around the pivoting shaft.

14. The construction machine according to claim 5 or 13, wherein the spacers are arranged alongside the fixer.
